Europäisches Patentamt

European Patent Office

Office européen des brevets

(19)

(11)  **EP 1 223 763 A1**

(12)  **DEMANDE DE BREVET EUROPEEN**

(43) Date de publication:
**17.07.2002  Bulletin 2002/29**

(51) Int Cl.$^7$: **H04N 7/30**, H04N 7/26

(21) Numéro de dépôt: **01204949.0**

(22) Date de dépôt: **18.12.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité:  **26.12.2000  FR 0017039**

(71) Demandeur: **Koninklijke Philips Electronics N.V.**
**5621 BA Eindhoven (NL)**

(72) Inventeur: **Rouvellou, Laurent**
**75008 Paris (FR)**

(74) Mandataire: **Chaffraix, Jean**
**Société Civile S.P.I.D.**
**156, Boulevard Haussmann**
**75008 Paris (FR)**

(54)  **Procédé de traitement de données d'image**

(57)  La présente invention concerne une méthode de traitement de données comprises dans une image numérique d'entrée. La méthode de traitement de données comprend une étape de filtrage gradient (GF) de valeurs (Y) des pixels permettant de détecter (THR) une zone de contours naturels (NC) à l'intérieur de l'image numérique d'entrée. Elle comprend également une étape de détection (BAD) d'artefacts de blocs dus à une technique de codage par blocs, basée sur le calcul (CT) d'une valeur de discontinuité à partir des valeurs (Y) d'un pixel courant et de pixels adjacents audit pixel courant. La méthode comprend enfin une étape de filtrage passe bas (LPF) des valeurs (Y) des pixels issus de l'étape de détection d'artefacts de blocs (BAD) à l'exception des pixels contenus dans les zones de contours naturels (NC) déterminées par l'étape de filtrage gradient.

FIG. 1

EP 1 223 763 A1

**Description**

La présente invention concerne un procédé de traitement de données comprises dans une image numérique d'entrée.

Elle trouve son application dans la détection de blocs dans une image numérique précédemment codée puis décodée selon une technique de codage par blocs, la norme MPEG (de l'anglais Moving Pictures Expert Group) par exemple, et dans la correction des données comprises dans ces blocs afin d'atténuer les artefacts visuels causés par la technique de codage par blocs.

La demande de brevet européen n° 0 817 497 A2 décrit une méthode permettant de réduire les artefacts de blocs et les artefacts dus au bruit des contours (en anglais "ringing noise") d'une image compensée en mouvement. Pour cela, la méthode de traitement selon l'art antérieur comprend une étape de filtrage gradient permettant de générer une carte de contours binaires en effectuant un seuillage à partir de valeurs de seuil dites locale et globale. Ladite méthode comprend une étape permettant de décider si une zone à l'intérieur de la carte de contours binaires, ladite zone étant déterminée à l'aide d'une fenêtre de filtrage, est une zone homogène ou une zone contenant des contours. La méthode comprend enfin une étape de filtrage qui utilise un premier jeu de coefficients prédéterminés si la zone est homogène, et un second jeu de coefficients prédéterminés si la zone contient des contours, le second jeu de coefficients prédéterminés étant adapté en fonction de la position des contours dans la zone.

La présente invention a pour but de proposer une méthode de traitement de données permettant de détecter de façon simple et efficace des artefacts de blocs dus à la compression des données. L'invention prend en compte les considérations suivantes.

La méthode de traitement de données selon l'art antérieur nécessite le calcul d'une moyenne et d'un écart type des valeurs de gradient des pixels appartenant à un bloc, ceci pour chaque bloc de l'image numérique d'entrée. Un tel calcul coûte cher en terme de ressources de calcul, rendant de ce fait une telle méthode complexe à implémenter.

Afin de pallier ces inconvénients, le procédé de traitement de données selon la présente invention est remarquable en ce qu'il comprend une étape de détection d'artefacts de blocs dus à une technique de codage par blocs, ladite étape de détection comprenant les sous-étapes :

- de calcul d'une valeur de discontinuité à partir de valeurs d'un pixel courant et de pixels adjacents audit pixel courant,
- de détermination d'une valeur d'artefact du pixel courant à partir de valeurs de discontinuité du pixel courant et de pixels voisins du pixel courant,
- d'identification des artefacts de blocs à partir des valeurs d'artefact.

Une telle méthode de traitement de données permet de détecter sur la base d'un simple test de continuité les artefacts de blocs dus à la technique de codage par blocs. Ce test de continuité ainsi que l'étape de détermination d'une valeur d'artefact ne nécessitent qu'un nombre limité de pixels, à savoir le pixel courant et quelques pixels autour du pixel courant. Dans le mode de réalisation préférée, la valeur de discontinuité est calculée à partir de la comparaison entre une valeur d'un pixel courant et une demi-somme des valeurs des pixels précédant et suivant immédiatement le pixel courant. La méthode de traitement de données selon l'invention ne nécessite par conséquent que de faibles ressources de calcul afin de détecter les artefacts de blocs.

De plus, la méthode de traitement selon l'art antérieur ne différencie pas les frontières de blocs correspondant à des artefacts de blocs de celles correspondant aux contours naturels d'objets contenus dans l'image. Un post-traitement des frontières de blocs détectés par une telle méthode risque donc de dégrader les contours naturels contenus dans l'image.

C'est pourquoi le procédé de traitement de données selon l'invention comprend en outre une étape de filtrage gradient des valeurs des pixels destinée à détecter une zone de contours naturels à l'intérieur de l'image numérique d'entrée.

Ainsi, lors d'une étape de post-traitement, les pixels issus de l'étape de détection d'artefacts de blocs seront traités à l'exception des pixels contenus dans les zones de contours naturels déterminées par l'étape de filtrage gradient.

Enfin, la méthode décrite dans le document de l'art antérieur nécessite de connaître les paramètres de décodage de l'image numérique d'entrée. Or, ces paramètres de décodage sont accessibles au niveau du décodeur mais ne le sont pas au niveau du récepteur de télévision.

C'est pourquoi le procédé de traitement de données est remarquable en ce qu'il comprend les sous-étapes de :

- stockage d'une position dans l'image des artefacts de blocs issus de l'étape d'identification dans un tableau,
- calcul d'une position d'une grille correspondant aux blocs de la technique de codage par blocs à partir d'une position majoritaire des artefacts de blocs dans le tableau, et d'une taille de grille à partir d'une plus grande valeur parmi des valeurs de compteurs représentant un nombre d'occurrence d'une distance entre un artefact de bloc vertical courant et un artefact de bloc vertical le précédant immédiatement.

La détermination de la taille et de la position de la grille correspondant aux blocs de la technique de codage par blocs permet d'appliquer l'étape de post-traitement de manière adaptée sans avoir besoin de la connaissance des paramètres de décodage.

Ces aspects de l'invention ainsi que d'autres aspects plus détaillés apparaîtront plus clairement grâce à la description suivante de plusieurs modes de réalisation de l'invention, donnés à titre d'exemples non limitatifs et en regard des dessins annexés dans lesquels :

- la Fig. 1 est un diagramme représentant la méthode de traitement de données selon l'invention,
- les Figs. 2a et 2b illustrent l'étape de détermination d'artefacts de blocs pour différentes configurations de valeurs de pixels,
- la Fig. 3 est un diagramme représentant les étapes d'identification et de stockage des artefacts de blocs dus à la technique de codage par blocs selon une direction horizontale,
- la Fig. 4 est un diagramme représentant les étapes d'identification et de stockage des artefacts de blocs dus à la technique de codage par blocs selon une direction verticale,
- la Fig. 5 est un diagramme représentant l'étape de calcul de la position de la grille,
- la Fig. 6 est un diagramme représentant l'étape de calcul de la taille de la grille,
- les Figs. 7a et 7b illustrent l'étape de filtrage gradient qui permet de détecter une zone de contours naturels respectivement selon une direction horizontale et verticale, et
- les Figs. 8a et 8b illustrent l'étape de filtrage passe-bas qui permet de traiter les artefacts de blocs dus à la technique de codage par blocs respectivement selon une direction horizontale et verticale.

La présente invention concerne une méthode de traitement de données comprises dans un signal numérique vidéo d'entrée, ladite méthode étant destinée à améliorer la qualité visuelle dudit signal numérique vidéo lorsque celui a été précédemment codé selon une technique de codage par blocs.

La méthode de traitement de données a été développée plus particulièrement dans le cadre de séquences d'images numériques codées puis décodées selon la norme MPEG. Elle reste néanmoins applicable pour tout autre signal numérique vidéo codé puis décodé selon une technique de codage par blocs telle que H.261 ou H.263 par exemple.

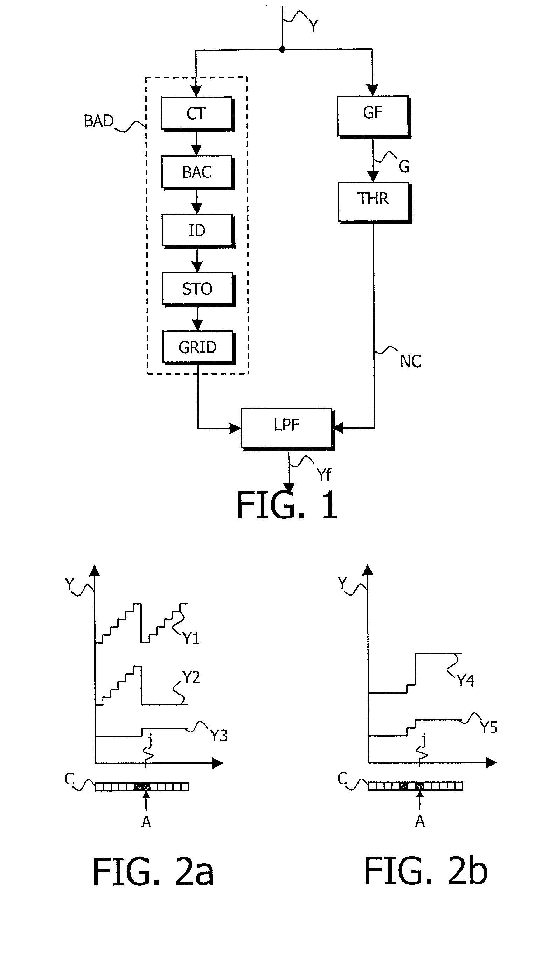

La Fig. 1 représente un diagramme de la méthode de traitement de données selon l'invention. Ladite méthode de traitement de données comprend :

- une étape de filtrage gradient (GF) de valeurs (Y) des pixels permettant de détecter (THR) une zone de contours naturels (NC) à l'intérieur de l'image numérique d'entrée,
- une étape de détection (BAD) d'artefacts de blocs dus à la technique de codage par blocs, ladite étape de détection comprenant les sous-étapes :

- de calcul (CT) d'une valeur de discontinuité à partir des valeurs (Y) d'un pixel courant et de pixels adjacents audit pixel courant,
- de détermination (BAC) d'une valeur d'artefact du pixel courant à partir de valeurs de discontinuité du pixel courant et de pixels voisins du pixel courant,
- d'identification (ID) des artefacts de blocs à partir des valeurs d'artefact,
- de stockage (STO) d'une position dans l'image des artefacts de blocs issus de l'étape d'identification (ID) dans un tableau, et
- de calcul (GRID) d'une position d'une grille correspondant aux blocs de la technique de codage par blocs à partir d'une position majoritaire des artefacts de blocs dans le tableau, et d'une taille de grille à partir d'une plus grande valeur parmi des valeurs de compteurs représentant un nombre d'occurrence d'une distance entre un artefact de bloc vertical courant et un artefact de bloc vertical le précédant immédiatement.
- une étape de filtrage passe bas (LPF) des valeurs (Y) des pixels issus de l'étape de détection d'artefacts de blocs (BAD) à l'exception des pixels contenus dans les zones de contours naturels (NC) déterminées par l'étape de filtrage gradient.

Dans un premier temps, la méthode de traitement de données a pour but de détecter les artefacts de blocs dus à un codage séparé, par la technique de codage par blocs, de blocs de n x n pixels, avec n = 8 dans le cas de la norme MPEG.

Pour cela, il est nécessaire en tout premier lieu d'extraire les contours naturels et la texture de l'image afin d'éviter des détections erronées d'artefacts de blocs. A cet effet, la méthode de détection d'artefacts de blocs comprend une étape de filtrage gradient (GF) des valeurs (Y) des pixels contenus dans l'image numérique d'entrée afin de fournir des valeurs filtrées (G). Dans le mode de réalisation préférée, ladite étape de filtrage gradient utilise des filtres de Sobel et les valeurs (Y) des pixels en question sont les valeurs de luminance. De tels filtres ont été choisis car ils assurent une détection de contours à la fois robuste et efficace. De plus, ces filtres ont, outre leur fonction de calcul d'un gradient, un effet de lissage des données filtrées ce qui augmente, d'une part, leur robustesse à la détection de contours dans le cas d'image bruitée, et permet, d'autre part, d'éviter l'assimilation des pixels dus au bruit de contours (en anglais "ringing noise") à des contours naturels. Les filtres de Sobel $S_H$ et $S_V$ appliqués respectivement horizontalement et verticalement sont les suivants :

$$S_H = \begin{bmatrix} -1 & -2 & -1 \\ 0 & 0 & 0 \\ 1 & 2 & 1 \end{bmatrix} \qquad S_V = \begin{bmatrix} -1 & 0 & 1 \\ -2 & 0 & 2 \\ -1 & 0 & 1 \end{bmatrix}$$

Les valeurs de luminance $G_H$ et $G_V$ après filtrage sont alors $G_H = Y.S_H$ et $G_V = Y.S_V$. Ces valeurs filtrées (G) sont ensuite comparées à des valeurs de seuil (THR). Si elles sont supérieures aux valeurs de seuil, alors un contour naturel (NC) est détecté. Ces valeurs de seuil doivent être suffisamment faibles pour détecter les textures homogènes mais doivent être suffisamment élevées pour ne pas extraire des discontinuités dues à des artefacts de blocs et non à des contours naturels. Dans le mode de réalisation préférée, les valeurs de seuil horizontal $THR_H$ et vertical $THR_V$ sont respectivement égales à 35 et 50 pour des valeurs de luminance variant de 0 à 255.

La méthode de détection d'artefacts de blocs comprend également une étape (CT) permettant de tester la continuité ou la discontinuité d'une valeur d'un pixel courant par rapport aux pixels qui lui sont adjacents. La détection des points de discontinuité est basée sur l'étude de la dérivée seconde de la fonction discrète constituée par les valeurs successives de luminance (Y). Cette dérivée seconde est nulle si :

$$2 \cdot Y(i,j) = Y(i-1,j) + Y(i+1,j) \text{ selon une direction verticale,} \tag{1}$$

$$2 \cdot Y(i,j) = Y(i,j-1) + Y(i,j+1) \text{ selon une direction horizontale,} \tag{2}$$

où $Y(i,j)$ est la valeur de luminance du pixel de position $(i,j)$.

Des valeurs de discontinuité verticale $c_v(i,j)$ ou horizontale $c_h(i,j)$ selon la direction horizontale sont déduites respectivement à partir des équations (1) et (2). Dans le mode de réalisation préférée, la valeur de discontinuité est une valeur binaire égale à 1 si la dérivée seconde est nulle, donc s'il y a continuité des valeurs de luminance, et à 0 dans le cas contraire, soit :

$$c_v(i,j) = \begin{cases} 1 & \text{si } 2 \cdot Y(i,j) = Y(i-1,j) + Y(i+1,j) \\ 0 & \text{sinon} \end{cases} \tag{3}$$

$$c_h(i,j) = \begin{cases} 1 & \text{si } 2 \cdot Y(i,j) = Y(i,j-1) + Y(i,j+1) \\ 0 & \text{sinon} \end{cases} \tag{4}$$

L'étape (CT) de test de discontinuité est suivie d'une étape de détermination (BAC) d'une valeur d'artefact du pixel courant à partir de valeurs de discontinuité du pixel courant et de pixels voisins du pixel courant.

Les Figs. 2a et 2b illustrent l'étape de détermination d'artefacts de blocs pour des configurations différentes (Y1 à Y5) de pixels. Les valeurs de discontinuité (C) sont également représentées pour les pixels pris en considération dans la détermination d'artefact (A), une valeur de discontinuité égale à 0 étant représentée par un carré noir, et une valeur égale à 1 étant représentée par un carré gris. La détermination d'un premier type d'artefact Av1 est effectuée à partir de l'équation (5), correspondant à la Fig. 2a :

**4**

$$Av1(i,j)=\overline{c_h(i,j-1)}\cdot\overline{c_h(i,j)}\cdot(c_h(i,j+1)+c_h(i,j+3)+c_h(i,j-4)+c_h(i,j-2)) \tag{5}$$

où $\bar{c}$ représente la valeur complémentaire de c.

La détermination d'un second type d'artefact Av2 est effectuée à partir de l'équation (6), correspondant à la Fig. 2b :

$$Av2(i,j) = c_h(i,j-3)\cdot\overline{c_h(i,j-2)}\cdot\overline{c_h(i,j)}\cdot c_h(i,j+2) \tag{6}$$

Ces deux équations sont utilisées de préférence pour la détermination d'artefacts verticaux. Pour la détection d'artefacts horizontaux, la détermination d'artefact Ah est effectuée à partir de l'équation suivante :

$$Ah(i,j) = c_v(i,j)\cdot\overline{c_v(i+1,j)} \tag{7}$$

En effet, le sous-échantillonnage vertical dans le cas d'images constituées de deux trames entrelacées conduit à utiliser une équation plus simple, le traitement de la trame selon la direction verticale étant de surcroît coûteux en terme de mémoire. De façon plus générale, ces différentes équations ont toutes le même objectif, à savoir déterminer une discontinuité centrée sur le pixel courant de position (i,j), et déterminer une continuité dans son voisinage proche. Ainsi, la présente invention n'est en rien limitée par ces équations. En outre, les zones très sombres dans lesquelles des perturbations naturelles (en anglais "clamping noise") peuvent se produire, sont généralement exclues de la zone de détermination d'artefacts.

Le résultat de cette étape de détermination est une valeur d'artefact horizontal ou vertical égale à 1 pour un pixel de position (i,j) lorsque l'une ou plusieurs des équations (1) à (3) ou des équations similaires conduit à la détermination d'un artefact (A).

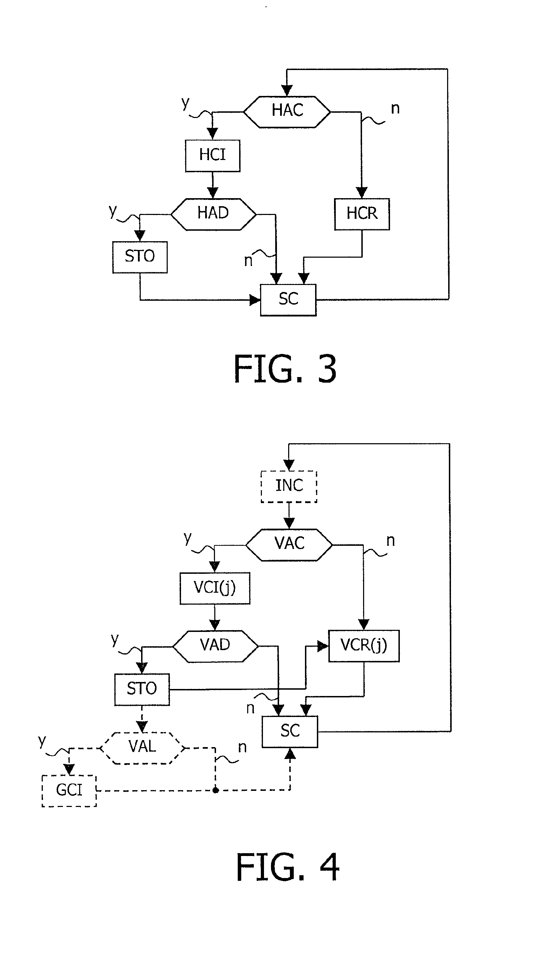

La méthode de détection d'artefacts de blocs comprend ensuite une étape d'identification (ID) des artefacts de blocs à partir des valeurs d'artefact précédemment déterminées. Les Figs. 3 et 4 sont des diagrammes représentant cette étape d'identification respectivement selon une direction horizontale et verticale. Le principe général de cette étape d'identification est qu'un artefact de bloc horizontal ou vertical est identifié respectivement si W artefacts consécutifs selon une direction horizontale ou H artefacts consécutifs selon une direction verticale ont été déterminés, H étant la hauteur d'un bloc et W sa largeur.

Selon la Fig. 3, si un artefact horizontal (HAC) a été déterminé (y), alors un compteur horizontal (HCI) est incrémenté. La valeur de ce compteur horizontal est comparée à la largeur W d'un bloc (HAD). Si la valeur du compteur horizontal est supérieure à W (y), alors un artefact de bloc horizontal est identifié et un tableau hTab permet de stocker, lors d'une étape de stockage (STO), un premier compteur d'artefact de blocs à la position i%H, i étant la ligne de l'image où se trouve l'artefact de bloc horizontal, % étant l'opérateur qui a pour résultat le reste de la division de i par H. Si aucun artefact de bloc n'est identifié pour le pixel courant (n), alors le pixel suivant est testé (SC). Si aucun artefact n'a été déterminé pour le pixel courant (n), alors le compteur horizontal est remis à 0 (HCR) puis le pixel suivant est testé (SC).

Selon la Fig. 4, si un artefact vertical (VAC) a été déterminé (y), alors un compteur vertical (VCI(j)) est incrémenté pour la colonne j de l'image où se trouve l'artefact de bloc vertical. La valeur de ce compteur vertical est comparée à la hauteur H d'un bloc (VAD). Si la valeur de ce compteur vertical devient supérieure à H (y), alors un artefact de bloc vertical est identifié (y) et un tableau vTab permet de stocker, lors d'une étape de stockage (STO), un second compteur d'artefact de blocs à la position j%W. Si aucun artefact de bloc n'est identifié pour le pixel courant (n), alors le pixel suivant est testé (SC). Si aucun artefact n'a été déterminé pour le pixel courant (n), alors le compteur est remis à 0 pour la colonne concernée (VCR(j)) puis le pixel suivant est testé (SC). En outre, le compteur vertical est de préférence remis à 0 pour la colonne j (VCR(j)) après l'étape de stockage, ceci afin de réduire le coût mémoire.

Les tableaux hTab et vTab permettent de déduire la probabilité de distribution d'une grille correspondant à la taille des blocs de codage.

En effet, une image appartenant à un signal numérique vidéo codé selon la norme MPEG se décompose en blocs de 8 lignes de 8 pixels, le premier bloc de l'image commençant à la position (0,0). En raison des conversions numérique - analogique et analogique - numérique et suite à l'utilisation éventuelle d'algorithmes de pré-traitement du signal numérique vidéo, une image originale appartenant audit signal peut se retrouver décalée de quelques pixels. D'autre part, l'image originale peut être codée selon différents formats horizontaux de codage afin de conserver une bonne qualité visuelle pour de faibles débits de transmission. Dans ce cas, l'image originale est sous-échantillonnée horizontalement avant d'être codée puis sur-échantillonnée horizontalement lors du décodage afin de retrouver son format initial. Il en résulte une modification de la taille de la grille due au sur-échantillonnage, le codage étant toujours effectué sur des blocs de 8 lignes de 8 pixels. Si les valeurs de position et de taille de la grille sont connues lors du décodage dans un récepteur - décodeur numérique de télévision (en anglais "set-top-box), il n'en est pas de même pour un récepteur de télévision qui reçoit un signal analogique ne comportant pas de telles information.

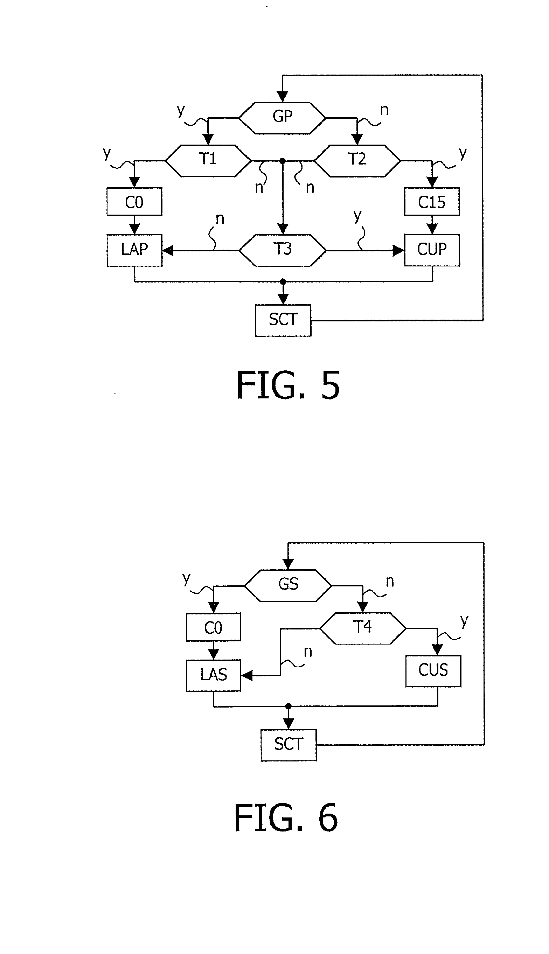

Afin de remédier à cet inconvénient, la méthode de traitement de données selon l'invention comprend une étape de calcul (GRID) d'une position d'une grille correspondant aux blocs de la technique de codage par blocs à partir d'une position majoritaire des artefacts de blocs dans le tableau, et d'une taille de grille à partir d'une plus grande valeur parmi des valeurs de compteurs représentant un nombre d'occurrence d'une distance entre un artefact de bloc vertical courant et un artefact de bloc vertical le précédant immédiatement. Cette étape de calcul (GRID) de la taille courante ou de la position courante d'une grille pour une image courante est effectuée en fonction des tailles ou des positions précédentes des grilles déterminées pour les images précédentes et d'un paramètre de confiance représentatif de l'évolution des valeurs desdites tailles ou positions précédentes selon les schémas des Figs. 5 ou 6. Dans le mode de réalisation préférée, on suppose qu'aucune conversion de format n'est nécessaire selon la direction verticale et que deux conversions de format sont possibles selon la direction horizontale résultant en trois tailles H x W de grilles possibles : 8x8 pixels, 8x10 pixels, et 8x12 pixels. L'invention ne se limite pas cependant à ces trois tailles de grille qui sont le plus fréquemment utilisées par le codage MPEG.

Afin de détecter la taille de la grille, la Fig. 4 introduit des étapes supplémentaires représentées en pointillés. Le principe de ces étapes est de déterminer si un artefact de bloc vertical courant est distant du dernier artefact de bloc vertical stocké de 8, 10 ou 12 pixels. Dans le mode de réalisation préférée, un compteur général est créé puis incrémenté (INC) après lecture du pixel suivant (SC). A la sortie de l'étape de stockage (STO), la valeur de ce compteur général est comparée aux valeurs 8, 10 et 12 (VAL). Si la valeur du compteur général est égale à 8, 10 ou 12, alors un des compteurs grid8, grid10 et grid12 relatifs respectivement à une largeur de grille de 8, 10 et 12 pixels est incrémenté (GCI) puis le pixel suivant est lu (SC).

La position de la grille (GP) est déterminée en cherchant les valeurs les plus probables (imax,jmax) dans les tableaux hTab[i] et vTab[j] après traitement d'une trame ou d'une image selon que l'image est entrelacée ou non. Ces valeurs les plus probables sont soit les valeurs donnant les valeurs maximales de hTab et vTab, soit les valeurs telles que la probabilité $p_k$ que la grille soit à la position (imax,jmax) est supérieure à un seuil prédéterminé (y), par exemple 50% selon chacune des directions horizontale et verticale, où

$$p_k = \frac{Tab[k]}{\sum_z Tab[z]} \text{ avec Tab = hTab ou vTab} \tag{8}$$

Selon la Fig. 5, si la position de la grille a changé (GP) par rapport à l'image précédente (la position est supposée ne pas changer lors de l'initialisation ou si les valeurs les plus probables ne peuvent être déterminées), alors un premier test (T1) est effectué afin de savoir si la valeur d'un compteur de position après décrémentation est inférieure à un premier seuil prédéterminé, 0 par exemple. Si tel est le cas (y), alors le compteur de position est mis à la valeur du premier seuil (C0) et la dernière valeur de position de grille est utilisée (LAP), cette valeur étant initialement (0,0) par exemple; puis la trame ou l'image suivante est investiguée (SCT). Si la position de la grille (GP) n'a pas changé (n), alors un second test (T2) est effectué afin de savoir si la valeur du compteur de position après incrémentation est supérieure à un second seuil prédéterminé, 15 par exemple. Si tel est le cas (y), alors le compteur est mis à la valeur du second seuil (C15) et la valeur courante de position de grille est utilisée (CUP); puis la trame ou l'image suivante est investiguée (SCT). Si les premier ou second tests (T1 ou T2) ne sont pas satisfaits (n), alors un troisième test (T3) est effectué afin de savoir si la valeur du compteur de position est supérieure à un troisième seuil prédéterminé, 5 par exemple. Si tel est le cas (y), alors la valeur courante de la position de la grille est utilisée (CUP); sinon (n) la dernière valeur de position de grille est utilisée (LAP). Ainsi, la position de la grille déterminée pour l'image courante est confirmée ou infirmée à partir de la valeur du compteur de position qui constitue un paramètre de confiance représentatif de la cohérence de la position de la grille au cours du temps. Un changement de la position de la grille n'est ainsi possible que si plusieurs trames consécutives donnent la même position, une nouvelle position étant d'autant plus difficile à confirmer que la position précédente était en place depuis de nombreuses trames (15 dans notre exemple).

La taille de la grille (GP) est déterminée en cherchant la plus grande valeur parmi les valeurs des compteurs grid8, grid10 et grid12 après traitement d'une trame ou d'une image selon que l'image est entrelacée ou non. Selon la Fig. 6, si la taille de la grille (GS) a changé par rapport à l'image précédente (y), alors un compteur de taille est mis à 0 (C0) et la dernière valeur de taille de grille est utilisée (LAS), cette valeur étant initialement 8x8 pixels par exemple; puis la trame ou l'image suivante est investiguée (SCT). Dans le cas contraire (n), un quatrième test (T4) est effectué afin de savoir si la valeur du compteur de taille après incrémentation est supérieure à une valeur de seuil, fixée à 5 dans notre exemple. Si tel est le cas (y), alors la valeur courante de taille de grille est utilisée (CUS); sinon (n) la dernière valeur de taille de grille est utilisée (LAS). Ainsi, le compteur de taille constitue un paramètre de confiance qui permet d'obtenir une cohérence sur la taille de la grille au cours du temps, la taille de la grille ne pouvant être modifiée que si 5 trames consécutives donnent la même taille de grille.

D'autres méthodes sont possibles pour déterminer la taille et la position de la grille. On pourra, par exemple, appliquer le diagramme de la Fig. 6 à la détermination de la position de la grille.

La méthode de détection qui vient d'être décrite permet de détecter si un signal vidéo, reçu par un récepteur - décodeur numérique de télévision ou un simple récepteur de télévision, a été codé selon une technique de codage par blocs. Selon le résultat de la méthode de détection, des actions correctrices sont alors décidées. Ces actions sont, par exemple, de ne pas appliquer un procédé particulier de traitement d'images ou, au contraire, d'appliquer une méthode de post-traitement en fonction des données fournies par la méthode de détection.

Dans le mode de réalisation préférée, une méthode de post-traitement est mise en oeuvre. Cette méthode comprend une étape de filtrage passe bas (LPF) des valeurs (Y) des pixels issus de l'étape de détection d'artefacts de blocs (BAD) à l'exception des pixels contenus dans les zones de contours naturels (NC) déterminées par l'étape de filtrage gradient (GF,THR). Le résultat de cette étape de filtrage est une image contenant des valeurs filtrées (Yf) de pixels et dont la qualité visuelle est améliorée par rapport à l'image avant traitement.

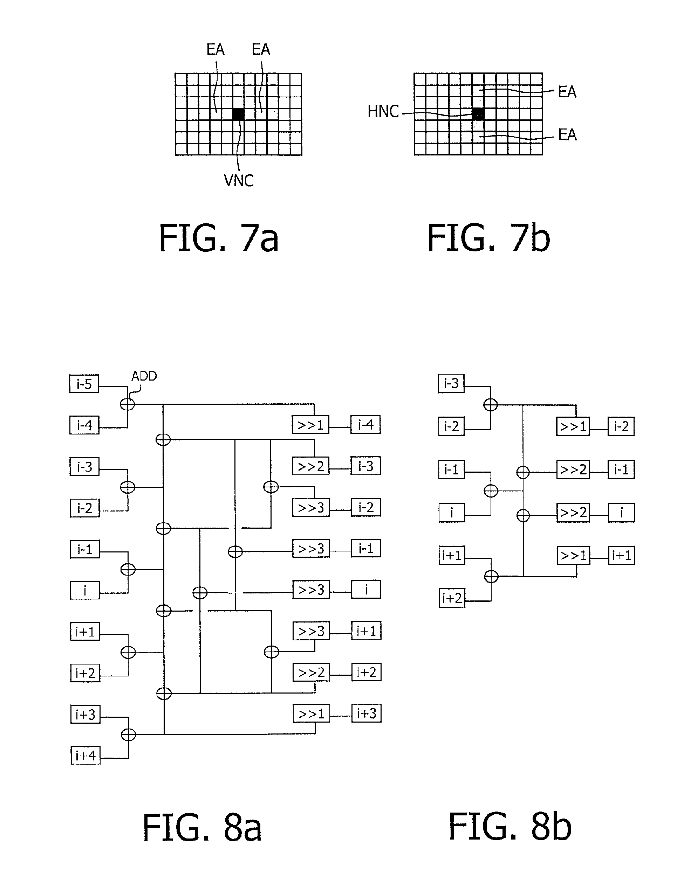

Les Figs. 7a et 7b définissent les zones de contours naturels respectivement selon une direction horizontale et verticale. Ces zones comprennent respectivement un contour naturel vertical (VNC) et quelques pixels de part et d'autre de ce contour (EA) selon une direction horizontale; un contour naturel horizontal (HNC) et quelques pixels de part et d'autre de ce contour (EA) selon une direction verticale.

Les filtres utilisés lors de cette étape de filtrage (LPF) sont appliqués de préférence sur les artefacts détectés. Ainsi, l'efficacité du filtrage dépend pour l'essentiel de l'efficacité de la détection. De ce fait, le coût de l'implémentation de l'étape de filtrage se trouve également réduit. De plus, l'étape de filtrage est parfaitement indépendante de l'étape de détection d'artefacts de blocs et peut par conséquent être adaptée selon les souhaits de l'utilisateur et les paramètres issus de l'étape de détection. Deux options de filtrage sont proposées ici à titre d'exemple.

Dans un premier mode de réalisation, des filtres LP5 à 5 coefficients et LP9 à 9 coefficients sont utilisés respectivement pour un filtrage vertical et horizontal. Ces filtres sont par exemple:

$$
LP5 \begin{cases} \text{les premier et dernier pixels ne sont pas filtrés} \\ \text{les second et avant − dernier pixels sont filtrés avec le filtre } \frac{1}{4}\begin{bmatrix} 1 & 2 & 1 \end{bmatrix} \\ \text{les autres pixels sont filtrés avec le filtre } \frac{1}{16}\begin{bmatrix} 1 & 4 & 6 & 4 & 1 \end{bmatrix} \end{cases} \quad (9)
$$

$$
LP9 \begin{cases} \text{les premier et dernier pixels ne sont pas filtrés} \\ \text{les second et avant − dernier pixels sont filtrés avec le filtre } \frac{1}{4}\begin{bmatrix} 1 & 2 & 1 \end{bmatrix} \\ \text{les autres pixels sont filtrés avec le filtre } \frac{1}{16}\begin{bmatrix} 1 & 1 & 2 & 2 & 4 & 2 & 2 & 1 & 1 \end{bmatrix} \end{cases} \quad (10)
$$

Dans un second mode de réalisation, les filtres sont des filtres de longueur variable définis par les diagrammes des Figs. 8a et 8b respectivement pour un filtrage horizontal et vertical. A titre d'exemple, le filtre horizontal correspond aux équations suivantes:

$$\text{pour le pixel } (i-4): \quad \frac{1}{2}\begin{bmatrix}1 & 1\end{bmatrix}$$

$$\text{pour le pixel } (i-3): \quad \frac{1}{4}\begin{bmatrix}1 & 1 & 1 & 1\end{bmatrix}$$

$$\text{pour le pixel } (i-2): \quad \frac{1}{8}\begin{bmatrix}1 & 1 & 2 & 2 & 1 & 1\end{bmatrix} \tag{11}$$

$$\text{...}$$

$$\text{pour le pixel } i: \quad \frac{1}{8}\begin{bmatrix}1 & 1 & 1 & 1 & 1 & 1 & 1 & 1\end{bmatrix}$$

$$\text{...}$$

où ADD représente une addition et » un décalage de bits vers la droite correspondant à une division par 2 (»1), 4 (»2), etc.... De tels filtres peuvent être implémentés de façon simple pour de faibles coûts mémoires.

La description ci-dessus en référence aux Figs. 2 à 8 illustre l'invention plus qu'elle ne la limite. Il est évident qu'il existe d'autres alternatives qui rentrent dans la portée des revendications ci-jointes.

Il existe de nombreuses manières pour implémenter les fonctions décrites au moyen de logiciel (en anglais "software"). A cet égard, les Figs. 2 à 8 sont très schématiques, chaque figure représentant un mode de réalisation seulement. Donc, bien qu'une figure montre différentes fonctions sous forme de blocs séparés, ceci n'exclut pas qu'un seul logiciel effectue plusieurs fonctions. Ceci n'exclut pas non plus qu'une fonction puisse être effectuée par un ensemble de logiciels.

Il est possible d'implémenter ces fonctions au moyen d'un circuit de récepteur de télévision ou d'un circuit de récepteur - décodeur numérique de télévision, ledit circuit étant convenablement programmé. Un jeu d'instructions contenu dans une mémoire de programmation peut provoquer le circuit à effectuer différentes opérations décrites précédemment en référence aux Figs. 2 à 8. Le jeu d'instructions peut aussi être chargé dans la mémoire de programmation par la lecture d'un support de données comme, par exemple un disque qui contient le jeu d'instructions. La lecture peut également s'effectuer par l'intermédiaire d'un réseau de communication comme, par exemple, le réseau internet. Dans ce cas, un fournisseur de service mettra le jeu d'instructions à la disposition des intéressés.

Aucun signe de référence entre parenthèses dans une revendication ne doit être interprété de façon limitative. Le mot "comprenant" n'exclut pas la présence d'autres éléments ou étapes listés dans une revendication. Le mot "un" ou "une" précédant un élément ou une étape n'exclut pas la présence d'une pluralité de ces éléments ou de ces étapes.

**Revendications**

1. Procédé de traitement de données comprises dans une image numérique d'entrée constituée de pixels, ledit procédé comprenant une étape de détection (BAD) d'artefacts de blocs dus à une technique de codage par blocs, ladite étape de détection comprenant les sous-étapes :

   - de calcul (CT) d'une valeur de discontinuité à partir de valeurs (Y) d'un pixel courant et de pixels adjacents audit pixel courant,
   - de détermination (BAC) d'une valeur d'artefact du pixel courant à partir de valeurs de discontinuité du pixel courant et de pixels voisins du pixel courant,
   - d'identification (ID) des artefacts de blocs à partir des valeurs d'artefact.

2. Procédé de traitement de données selon la revendication 1, **caractérisé en ce que** la sous-étape de calcul (CT) est apte à détecter une discontinuité si une valeur d'un pixel courant est différente d'une demi-somme d'une valeur du pixel le précédant immédiatement et de la valeur du pixel le suivant immédiatement.

3. Procédé de traitement de données selon la revendication 1, **caractérisé en ce qu'**il comprend en outre une étape de filtrage gradient (GF) des valeurs (Y) des pixels, destinée à détecter (THR) une zone de contours naturels (NC) à l'intérieur de l'image numérique d'entrée.

4. Procédé de traitement de données selon la revendication 3, **caractérisé en ce que** le filtrage gradient utilise un filtre de Sobel.

**5.** Procédé de traitement de données selon la revendication 3, **caractérisé en ce qu'**il comprend en outre une étape de filtrage passe bas (LPF) des valeurs (Y) des pixels issus de l'étape de détection d'artefacts de blocs (BAD) à l'exception des pixels contenus dans les zones de contours naturels (NC) déterminées par l'étape de filtrage gradient (GF,THR).

**6.** Procédé de traitement de données selon la revendication 1, **caractérisé en ce que** l'étape de détection (BAD) comprend en outre les sous-étapes de :

-   stockage (STO) d'une position dans l'image des artefacts de blocs issus de l'étape d'identification (ID) dans un tableau, et
-   calcul (GRID) d'une position d'une grille correspondant aux blocs de la technique de codage à partir d'une position majoritaire des artefacts de blocs dans le tableau.

**7.** Procédé de traitement de données selon la revendication 6, **caractérisé en ce que** la sous-étape de calcul (GRID) est destinée à déterminer une taille de grille à partir d'une plus grande valeur parmi des valeurs de compteurs représentant un nombre d'occurrence d'une distance entre un artefact de bloc vertical courant et un artefact de bloc vertical le précédant immédiatement.

**8.** Procédé de traitement de données selon la revendication 6 ou 7, **caractérisé en ce que** la sous-étape de calcul (GRID) de la taille courante ou de la position courante de la grille pour une image courante est effectuée en fonction des tailles ou des positions précédentes des grilles déterminées pour les images précédentes et d'un paramètre de confiance représentatif de l'évolution des valeurs desdites tailles ou positions précédentes.

**9.** Produit "programme d'ordinateur" pour récepteur de télévision comprenant un jeu d'instructions qui, lorsqu'elles sont chargées dans un circuit du récepteur de télévision, amène celui-ci à effectuer le procédé de traitement de données selon l'une des revendications 1 à 8.

**10.** Produit "programme d'ordinateur" pour récepteur - décodeur numérique de télévision comprenant un jeu d'instructions qui, lorsqu'elles sont chargées dans un circuit du récepteur - décodeur numérique de télévision, amène celui-ci à effectuer le procédé de traitement de données selon l'une des revendications 1 à 5.

FIG. 1

FIG. 2a

FIG. 2b

# FIG. 3

# FIG. 4

# FIG. 5

# FIG. 6

FIG. 7a          FIG. 7b

FIG. 8a          FIG. 8b

**Office européen des brevets**

**RAPPORT DE RECHERCHE EUROPEENNE**

Numéro de la demande

EP 01 20 4949

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 5 422 964 A (DEVIMEUX DANIEL ET AL) 6 juin 1995 (1995-06-06) | 1,2,9,10 | H04N7/30 H04N7/26 |
| Y | * colonne 2, ligne 60 - colonne 3, ligne 20 * <br> * colonne 4, ligne 30 - ligne 65 * <br> --- | 3-7 | |
| D,Y | EP 0 817 497 A (SAMSUNG ELECTRONICS CO LTD) 7 janvier 1998 (1998-01-07) * le document en entier * <br> --- | 3-5 | |
| Y | EP 0 998 149 A (TELEDIFFUSION FSE ;FRANCE TELECOM (FR)) 3 mai 2000 (2000-05-03) * le document en entier * <br> --- | 6,7 | |
| A | US 6 115 503 A (KAUP ANDRE) 5 septembre 2000 (2000-09-05) * colonne 3, ligne 16 - ligne 27 * <br> * colonne 7, ligne 50 - ligne 63 * <br> --- | 5 | |
| A | TAN ET AL.: "Frequency Domain Measurement of Blockiness in MPEG-2 Coded Video" 2000 IEEE INT. CONF. ON IMAGE PROCESSING, vol. 3, 10 septembre 2000 (2000-09-10), pages 977-980, XP002180228 * abrégé * <br> * page 977, colonne de gauche, alinéa 1 - page 978, colonne de droite, alinéa 2 * <br> --- | 3-5 | DOMAINES TECHNIQUES RECHERCHES (Int.Cl.7) <br><br> H04N |
| A | US 5 590 064 A (ASTLE BRIAN) 31 décembre 1996 (1996-12-31) * colonne 22, ligne 27 - colonne 23, ligne 25; figure 16 * <br> ----- | 1 | |

Le présent rapport a été établi pour toutes les revendications

| Lieu de la recherche | Date d'achèvement de la recherche | Examinateur |
|---|---|---|
| LA HAYE | 22 avril 2002 | Foglia, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 01 20 4949

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

22-04-2002

| Document brevet cité au rapport de recherche | | Date de publication | Membre(s) de la famille de brevet(s) | | Date de publication |
|---|---|---|---|---|---|
| US 5422964 | A | 06-06-1995 | FR | 2690299 A1 | 22-10-1993 |
| | | | DE | 69309529 D1 | 15-05-1997 |
| | | | DE | 69309529 T2 | 11-09-1997 |
| | | | EP | 0566202 A1 | 20-10-1993 |
| | | | JP | 6062387 A | 04-03-1994 |
| | | | NO | 931227 A | 18-10-1993 |
| EP 0817497 | A | 07-01-1998 | KR | 242637 B1 | 01-02-2000 |
| | | | CN | 1170318 A | 14-01-1998 |
| | | | EP | 0817497 A2 | 07-01-1998 |
| | | | JP | 2877768 B2 | 31-03-1999 |
| | | | JP | 10066090 A | 06-03-1998 |
| | | | US | 5877813 A | 02-03-1999 |
| EP 0998149 | A | 03-05-2000 | FR | 2785116 A1 | 28-04-2000 |
| | | | EP | 0998149 A1 | 03-05-2000 |
| US 6115503 | A | 05-09-2000 | DE | 19626985 C1 | 02-01-1998 |
| | | | EP | 0817496 A2 | 07-01-1998 |
| US 5590064 | A | 31-12-1996 | AUCUN | | |

EPO FORM P0460

Pour tout renseignement concernant cette annexe : voir Journal Officiel de l'Office européen des brevets, No.12/82